# EUROPÄISCHE PATENTSCHRIFT

(11) **EP 0 529 185 B1**
(45) Veröffentlichungstag und Bekanntmachung des Hinweises auf die Patenterteilung: **12.07.1995**
(21) Anmeldenummer: 92102906.2
(22) Anmeldetag: 21.02.1992
(51) Int. Cl.: B65G 27/30

(54) **Vibrationsförderer**
Vibratory conveyor
Convoyeur à vibrations

(30) Priorität: 25.10.1991 DE 4135212; 27.11.1991 DE 4138957; 27.08.1991 DE 4128289; 25.10.1991 DE 4135211; 27.11.1991 DE 4138956
(43) Veröffentlichungstag der Anmeldung: 03.03.1993
(60) Teilanmeldung: 94116213.3
(73) Patentinhaber: Kumeth, Siegmund, D-92224 Amberg (DE)
(72) Erfinder: Kumeth, Siegmund, D-92224 Amberg (DE); Krell, Helmut, D-98527 Suhl (DE)
(74) Vertreter: Graf, Helmut, Dipl.-Ing.

(56) Entgegenhaltungen:
- EP-A- 0 157 331
- DD-A- 257 737
- FR-A- 2 050 234
- US-A- 3 528 541
- US-A- 3 915 292
- PATENT ABSTRACTS OF JAPAN, Bd. 10, Nr. 246 (M-510)(2302) 23. August 1986

## Beschreibung

Die Erfindung bezieht sich auf einen Vibrationsförderer gemäß Oberbegriff Patentanspruch 1.

Ein als Vibrationslängsförderer ausgebildeter Förderer dieser Art ist grundsätzlich bekannt (FR-A-2050234).

Vibrationslängsförderer werden insbesondere bei automatischen Fertigungsprozessen, d. h. bei Fertigungs- oder Montageautomaten für die Speicherung und Weitergabe von Werkstücken oder Bauteilen, insbesondere auch Kleinstbauteilen verwendet. Das Förderelement ist bei diesen Vibrationslängsförderern in den meisten Fällen eine Förderrinne, die dann an einem ersten, der Nutzmasse zugeordneten Schwingelement des Schwingsystems befestigt ist.

Um eine Übertragung von Vibrationen auf einen Maschinentisch oder ein Maschinengestell, an dem der Vibrationslängsförderer vorgesehen ist, zu vermeiden und damit insbesondere auch Störungen anderer am Maschinentisch bzw. Maschinengestell ebenfalls vorgesehener Systeme durch solche Vibrationen zu vermeiden, ist bei dem Vibrationslängsförderer der eingangs genannten Art zusätzlich zur Nutzmasse ein eine Gegenmasse bildendes Schwingelement ebenfalls schwingend an einem Basiselement vorgesehen.

Durch den Antrieb, der von einer von einem sich in der Amplitude ändernden stromdurchflossenen Magnetspule mit Magnetkern und einem zugeordneten Magnetanker gebildet ist, werden die beiden Schwingelemente bzw. die Nutzmasse und Gegenmasse gegenläufig in Schwingung bzw. Vibration versetzt, und zwar die zumindest Teil der Nutzmasse bildende Förderrinne in der Weise, daß sie eine hin- und hergehende Bewegung ausführt mit einer größeren, sich in Längsrichtung der Rinne erstreckenden Bewegungskomponente und mit einer kleineren, in vertikaler Richtung verlaufenden Bewegungskomponente. Die Bauelemente werden durch diese Vibrationsbewegung in Längsrichtung der Förderrinne, d. h. in Förderrichtung bewegt werden. Damit durch die Verwendung der Nutzmasse und Gegenmasse keine Vibrationskräfte auf das Basiselement und über dieses auf den Maschinentisch oder dergleichen Maschinengestell übertragen werden, ist es notwendig, daß (auch unter Berücksichtigung der Federkonstanten der Federeinrichtungen bzw. -elemente) die Nutzmasse und die Gegenmasse hinsichtlich ihres Massengewichtes exakt aufeinander abgestimmt sind (Massenabgleich). Die Nutzmasse ist zu einem Großteil von der Masse des Förderelementes gebildet, welches an den jeweiligen Anwendungsfall angepaßt ist und dessen Masse somit von Anwendungsfall zu Anwendungsfall unterschiedlich sein kann.

Für den Massenabgleich zwischen Nutzmasse und Gegenmasse setzt der bekannte Vibrationslängsförderer eine entsprechende Bearbeitung des Förderelementes voraus, wofür es dann erforderlich ist, daß Förderelement vom Schwingsystem abzunehmen, zu bearbeiten und erneut am Schwingsystem zu montieren. Da der Vibrationslängsförderer und insbesondere dessen Förderelement mit weiteren Elementen eines Systems zusammenwirken, ist es auch erforderlich, nach jeder erneuten Montage des Förderelementes dieses wiederum exakt in bezug auf die übrigen Elemente des Systems neu zu justieren. Dieser Arbeitsaufwand ist dann besonders groß, wenn das Förderelement mehrfach demontiert, bearbeitet und anschließend wieder montiert werden muß, bis der optimale Massenabgleich erreicht ist.

Bekannt ist weiterhin ein Vibrationslängsförderer mit den Merkmalen des Oberbegriffs des Patentanspruches 1 (EP-A-157331), der eine trogartige Förderstrecke aufweist, die auf einem ersten Schwingelement ein Schwingsystem vorgesehen ist. Dieses besitzt zusätzlich zu dem ersten Schwingelement ein zweites, eine Gegenmasse bildendes Schwingelement, welches ebenso wie das erste Schwingelement an Blattfedern gehalten ist. Weiterhin ist ein zwischen den Schwingelementen wirkenden Antrieb vorgesehen. Die beiden Schwingelemente und die zugehörigen Federn sind dabei jeweils symmetrisch zu einer vertikalen Mittelebene des Vibrationsförderers bzw. der Förderschiene vorgesehen.

Aufgabe der Erfindung ist es, ein Vibrationsförderer so auszugestalten, daß sich ein besonders einfacher und übersichtlicher Aufbau ergibt.

Zur Lösung dieser Aufgabe ist ein Vibrationsförderer entsprechend dem kennzeichnenden Teil des Patentanspruches 1 ausgebildet.

Der erfindungsgemäße Vibrationsförderer zeichnet sich durch einen einfachen und übersichtlichen Aufbau aus, bei dem die Gegenmasse, der Antrieb sowie die Federelemente leicht zugänglich sind.

Bei der Erfindung sind die beiden Schwingelemente beidseitig von einer die Förderrichtung einschließenden vertikalen Mittelebene voneinander beabstandet angeordnet. Bei an dem ersten Schwingelement bzw. auf dessen Oberseite befestigtem Förderelement bildet dann das zweite Schwingelement mit seiner Oberseite einen frei zugänglichen Bereich zum Befestigen der Hilfsmassen.

Bei dieser Auführung ist es auch möglich, daß bei einem geteilten Förderelement, z.B. bei einer geteilten Förderrinne ein Teil dieses Förderelementes an dem ersten Schwingelement und ein anderes Teil dieses Förderelementes an dem zweiten Schwingelement befestigt wird, also das Förderelement selbst, d.h. dessen anderes Teil einen Teil der Hilfs- bzw. Gegenmasse bildet.

Bei der Erfindung kann der Massenabgleich, d.h. die Kompensation der unterschiedlichen Masse verschiedener, mit dem Vibrationsförderer verwendeter Förderelemente dadurch erfolgen, daß zumindest ein Federelement der Nutzmasse oder eines die Nutzmasse einschließenden Schwingsystems derart veränderbar bzw. einstellbar ist, daß die Resonanz- oder Eigenfrequenz der Nutzmassse gleich oder in etwa gleich der Eigenfrequenz der Gegenmasse ist. Es erfolgt hier also eine Änderung der Federkonstanten wenigstens eines Federelementes beispielsweise der Nutzmasse und keine Änderung der Gegenmasse bzw. Hilfsmasse. Bevorzugt ist bei dieser Ausführung die Gegenmasse so gewählt, daß sie gleich der Nutzmasse dann ist, wenn von den für die Verwendung vorgesehenen unterschiedlichen Förderelementen dasjenige verwendet ist, welches die größte Masse aufweist. Dies bedeutet dann auch, daß bei Verwendung des Förderelementes mit der größten Masse die Federkonstanten der Federelemente der Nutz- und Gegenmasse gleich sind.

Der Vibrationsförderer wird so betrieben, daß die Resonanz- oder Eigenfrequenz des Schwingungssystems, die eine Funktion der Masse bzw. Gegenmasse und der von den Federelementen erzeugten Federkonstanten ist, möglichst gleich der Frequenz des Antriebs, beispielsweise einer mit Netzfrequenz betriebenen Magnetanordnung ist. Um in diesem Sinne eine optimale Arbeitsweise zu ermöglichen, ist bei einer bevorzugten Ausführungsform der Erfindung auch ein Abgleich bzw. eine Anpassung der Federkonstanten möglich, und zwar ohne daß eine völlige Demontage des Schwingsystems notwendig ist. Hierfür bilden die Federelemente feste, die Elemente des Schwingsystems aneinander haltende Federelemente, sowie zusätzlich entfernbare und/oder austauschbare Federelemente.

Weitere Ausführungen der Erfindung sind Gegenstand der Unteransprüche.

Die Erfindung wird im folgenden anhand der Figuren an Ausführungsbeispielen näher erläutert. Es zeigen:
- Fig. 1: in Seitenansicht eine Ausführungsform des erfindungsgemäßen Vibrationsförderers;
- Fig. 2: eine Stirnansicht des Vibrationsförderers der Fig. 1 in Blickrichtung des Pfeiles B der Fig. 1;
- Fig. 3: einen Schnitt entsprechend der Linie IV-IV der Fig. 1;
- Fig. 4: einen Schnitt entsprechend der Linie V-V der Fig. 1;
- Fig. 5: eine ähnliche Darstellung wie Fig. 4, jedoch bei einer weiteren Ausführungsform;
- Fig. 6: in Detaildarstellung die Befestigung der Blattfedern einer austauschbaren Blattfederanordnung;
- Fig. 7: in ähnlicher Darstellung wie Fig. 2 eine weitere Ausführungsform der Erfindung.

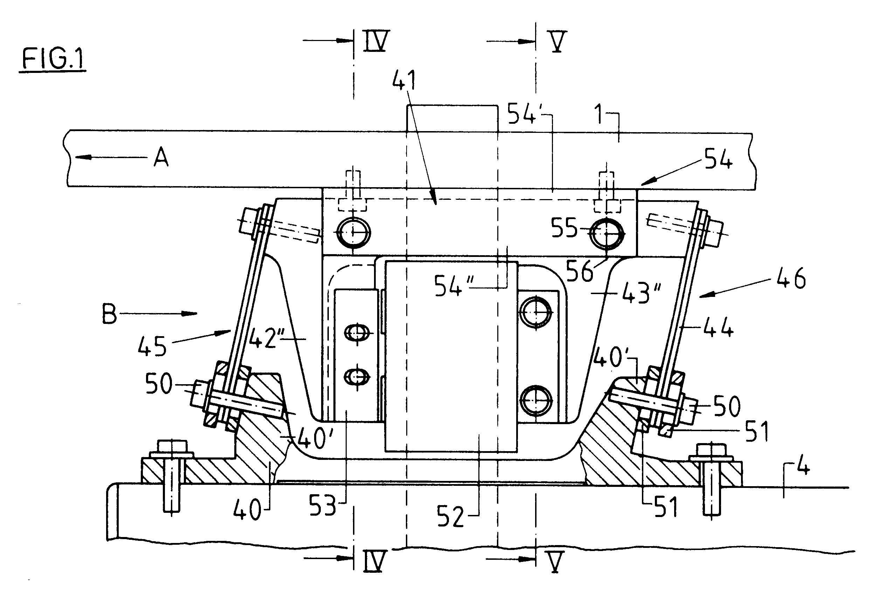

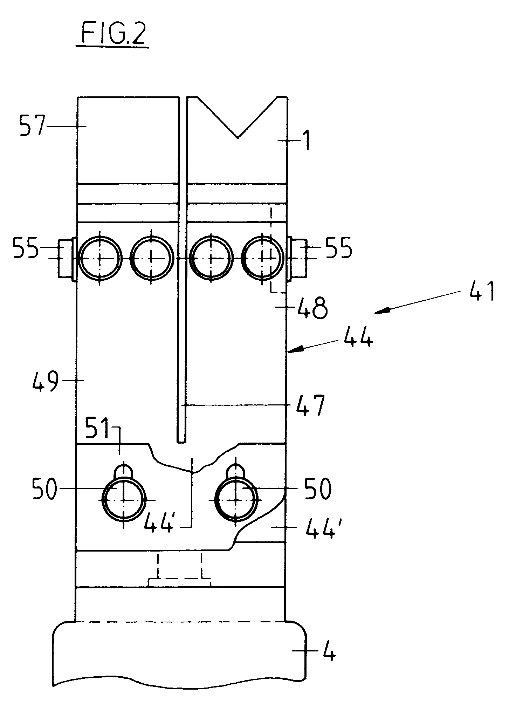

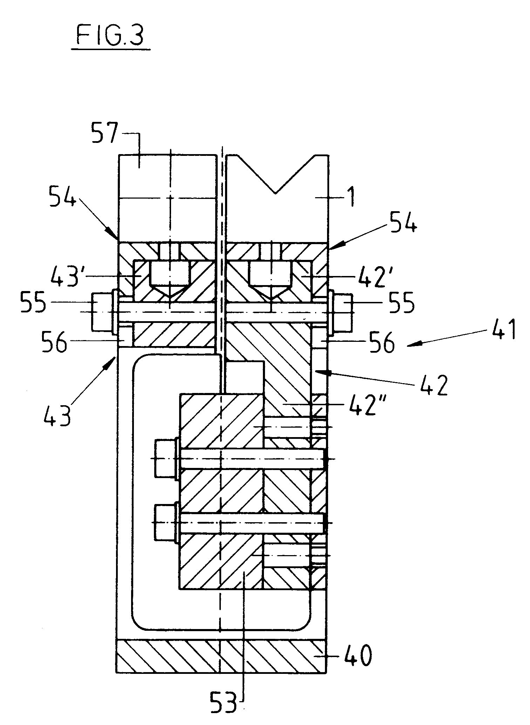

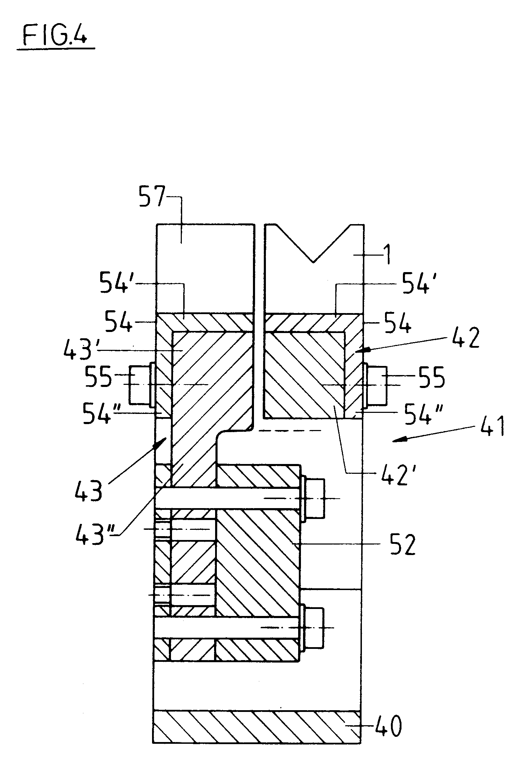

In den Figuren 1 bis 7 ist 1 eine Förderschiene oder Förderrinne, die eine geradlinige, im wesentlichen horizontale Förderstrecke des Vibrationslängsförderers für nicht näher dargestellte Klein-bzw. Kleinstbauteile bildet. Diese Förderrinne 1 ist an einem Vibrationsantrieb bzw. Schwingsystem 41 des Vibrationslängsförderers vorgesehen. Das Schwingsystem 41 ist seinerseits mittels einer Basisplatte 40 an einem Maschinengestell oder Maschinentisch 4 eines Fertigungsautomaten befestigt.

Durch das Schwingsystem 41 wird auf die Förderrinne 1 eine Vibrationsbewegung derart ausgeübt, daß sich die Bauteile in Richtung des Pfeiles A in Förderrinnenlängsrichtung bewegen.

In den Fig. 1 bis 4 ist eine Ausführung eines Vibrationsförderers gemäß der Erfindung dargestellt. Dieser Vibrationsförderer besteht aus einem am Maschinentisch 4 oder an einem anderen Tragelement oder Konsole befestigten Basisplatte 40, welche Teil eines Schwingsystems 41 ist. Dieses Schwingsystem besitzt neben der Basisplatte 40 zwei Schwingelemente 41 und 42, die aus einem geeigneten Metall mit möglichst geringem spezifischen Gewicht, beispielsweise aus einer Aluminiumlegierung hergestellt sind und hinsichtlich ihrer Formgebung jeweils im wesentlichen einen sich in der Achse der Förderrichtung A erstreckenden Jochabschnit 42' bzw. 43', der sich jeweils mit Abstand oberhalb der Basisplatte 40 befindet, sowie einen sich von diesem Jochabschnitt in vertikaler Richtung nach unten erstreckenden Schenkel 42'' bzw. 43'' aufweisen.

Wie die Fig. zeigen, sind die beiden Schwenkelelemente 42 und 43 quer zur Förderrichtung A nebeneinander und voneinander beabstandet vorgesehen, und zwar beidseitig von einer vertikalen, die Förderrichtung A binschließenden Mittelebene. Über zwei jeweils mehrere Blattfedern 44 aufweisende Blattfederpakete 45 und 46 sind die beiden Schwingelemente 42 und 43 mit der Basisplatte 40 verbunden. Die horizontale Breite der Basisplatte 40 senkrecht zur Förderrichtung A ist in etwa gleich der entsprechenden Breite der von den beiden Schwingelementen 42 und 43 gebildeten Anordnung. Die Blattfedern 44 sind jeweils so ausgebildet, daß jede Blattfeder 44 durch eine mittlere Schlitzung 47 zwei hinsichtlich ihrer Formgebung gleiche Zungen 48 und 49 bildet, die im unteren Bereich der jeweiligen Blattfeder 44 durch einen durchgehenden Abschnitt 44' miteinander verbunden sind. Die Zunge 48 jeder Blattfeder 44 ist mittels zweier Befestigungsschreiben 50 an dem in der Fig. 1 linken bzw. rechten Ende des Jochabschnittes 42' und die Zunge 49 jeder Blattfeder 44 mittels zweier Schrauben 50 an dem in der Fig. 1 linken bzw. rechten Ende des Jochabschnittes 43' befestigt. Im Bereich des durchgehenden Abschnittes 44' sind die Blattfedern 44 unter Verwendung von Schrauben 50 und Unterlegblechen 51 an der Basisplatte 40 bzw. an dort über die Oberseite wegstehenden Nasen 40' befestigt. Wie die Figuren zeigen, sind die bei der dargestellten Ausführungsform jeweils zwei Blattfedern 44 aufweisenden Blattfederanordnungen bzw. Pakete 45 und 46 gegenüber der Vertikalen wieder geneigt.

Wie die Figuren weiterhin zeigen, ist der Schenkel 42'' in Förderrichtung A gegenüber dem Schenkel 43'' versetzt, d.h. der Schenkel 42'' befindet sich an dem in der Fig. 1 linken, bezogen auf die Förderrichtung A vorderen Ende und der Schenkel 43'' an dem in der Fig. 1 rechten, bezogen auf die Förderrichtung A hinteren Ende des Schwingsystems 41. Am Schenkel 43'' ist die Magnetspule 52 befestigt, und zwar derart, daß diese Magnetspule innerhalb des zwischen den beiden Schenkeln 42'' und 43'' gebildeten Raumes unterhalb der Jochabschnitte 42' und 43' angeordnet ist. Am Schenkel 42'' ist ein mit der Magnetspule 52 zusammenwirkender Magnetanker 53 befestigt. Zwischen dem Eisenkern der Magnetspule 52 und dem Magnetanker 53 ist wiederum der Magnetspalt mit vorgegebener Breite gebildet, und zwar in einer senkrecht zur Förderrichtung A verlaufenden vertikalen Ebene.

Bei der dargestellten Ausführungsform bildet das Schwingelement 42 Teil der Nutzmasse, d.h. auf diesem Schwingelement ist die Förderschiene bzw. Förderrinne 1 befestigt, und zwar mit Hilfe eines Befestigungswinkels 54, der mit seinem einen horizontalen Schenkel 54' an die Unterseite der Förderrinne 1 angeschraubt ist und mit seinem vertikalen anderen Schenkel 54'' in eine seitliche Ausnehmung des Jochabschnittes 42' eingreift und dort mittels Schrauben 55 festgelegt ist. Für die Schrauben 55 besitzt der Befestigungswinkel 54 bzw. dessen Schenkel 54'' Schlitze 56, die zu der dem Schenkel 54' entfernt liegenden Kante des Schenkels 54'' hin offen sind. Hierdurch ist es möglich, die Förderrinne 1 nach dem Lösen der Schrauben 55 vom Schwingelement 42 nach oben abzuheben und wieder auf das Schwingelement 42 aufzusetzen, wobei sämtliche Einstellungen insbesondere am Vibrationsförderer sowie bezüglich der Zuordnung dieses Vibrationsförderers und der Förderrinne 1 zu anderen Elementen eines Gesamt-Systems erhalten bleiben.

Das Schwingelement 43 bildet bei der dargestellten Ausführungsform Teil der Gegenmasse, d.h. an dem Schwingelemnt 43 bzw. auf der Oberseite des Jochabschnittes 43' ist seitlich von der Förderrille 1 mit Hilfe eines Befestigungswinkels 54 die wiederum aus mehreren Einzelmassen bestehende Hilfsmasse 57 vorgesehen.

Die Besonderheit der in den Fig. 1 bis 4 dargestellten Ausführung bzw. des dortigen Schwingsystems 41 besteht darin, daß das Schwingelement 42 mit der Förderrinne 1 und das Schwingelement 43 mit der Hilfsmasse 57 beidseitig von einer vertikalen, die Förderrichtung A einschließenden Mittelebene vorgesehen sind. Hierdurch ergibt sich insbesondere eine sehr einfache Formgebung für die Schwingelemente 42 und 43, und zwar trotz der Möglichkeit eines einfachen Massenabgleichs durch entsprechende Wahl der Hilfsmasse 57 bzw. der Einzelmassen (Trimmgewichte).

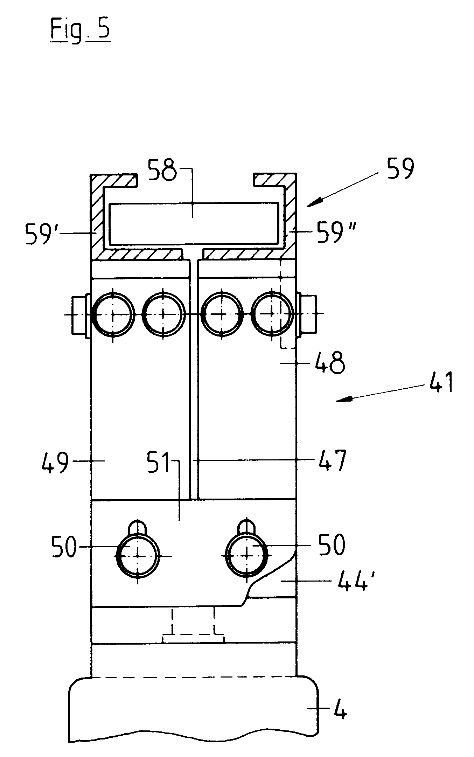

Wie die Fig. 5 zeigt, besteht grundsätzlich die Möglichkeit, bei Förderung bestimmter, z. B. besonders breiter Bauelemente 58 beide Schwingelemente 42 und 43 für die Bewegung dieser Bauelemente 58 zu nutzen. In diesem Fall wird dann anstelle der Förderrinne 1 eine geteilte Förderrinne 59 verwendet, die bei der dargestellten Ausführungsform einen im wesentlichen C-förmigen und an der Oberseite offenen Querschnitt besitzt und aus den beiden Elementen 59' und 59'' besteht. Jedes dieser Elemente ist in geeigneter Weise an der Oberseite eines Schwingelementes 42 bzw. 43 befestigt. Bei eingeschalteter, mit Wechselstrom betriebener Magnetspule 52 bewegen sich dann entsprechend den Schwingelementen 42 und 43 auch die beiden Elemente 59' und 59'' der Förderrinne oder -schiene 59 gegenläufig, so daß insgesamt auf die Bauelemente 58 eine Förderwirkung in Richtung des Pfeiles A der Fig. 1 ausgeübt wird, d.h. sich diese Bauelemente 58 in Förderrichtung bewegen. Durch entsprechende Wahl der Masse der Elemente 59' und 59'' und/oder durch einen zusätzlichen Massenabgleich wird wiederum dafür gesorgt, daß die Nutzmasse und der Gegenmasse gleich bzw. in etwa gleich sind, und zwar bei gleicher Federkonstanten der Zungen 48 und 49.

Um bei möglichst geringer Stromaufnahme der Magnetspule 52 eine optimale Förderwirkung zu erreichen, ist es sinnvoll, das jeweilige Schwingsystem 41 in der Nähe seiner mechanischen, d.h. durch die Massen und die Federkonstanten der Blattfedern 44 bzw. der Blattfederpakete 45 und 46 bestimmten Resonanz zu betreiben. Insbesondere dann, wenn Förderschienen oder -rinnen 1 bzw. 59 mit sehr unterschiedlicher Masse zusammen mit ein und demselben Schwingsystem 41 verwendet werden sollen und aus diesem Grunde ein Massenabgleich in einem relativ großen Bereich erforderlich ist, kann es notwendig, zumindest jedoch zweckmäßig sein, durch Austausch der Blattfedern 44 und/oder durch Änderung der Anzahl dieser Blattfedern die Federkonstante an die geänderte Masse anzupassen.

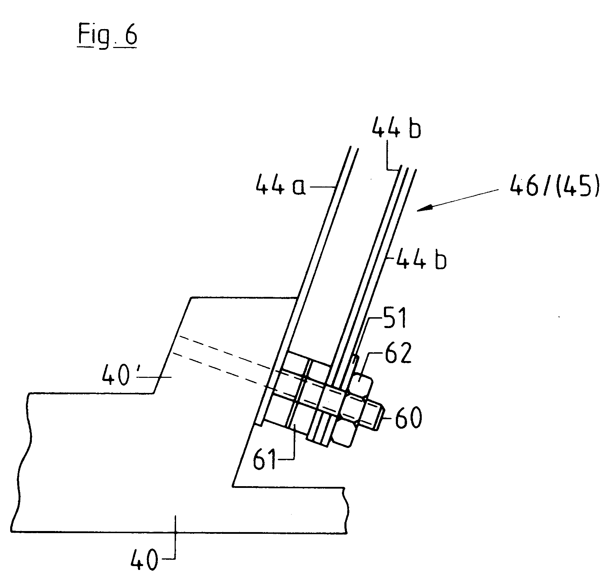

Um bei einem solchen Austausch der Blattfedern und/oder bei einer Änderung der Anzahl der Blattfedern nicht das gesamte Schwingsystem demontieren zu müssen bzw. dafür zu sorgen, daß die Befestigung der Schwingelemente 42 und 43 an der Basisplatte 40 erhalten bleibt, kann entsprechend der Fig. 6 bei jeder Blattfederanordnung 45 und 46 eine Blattfeder 44a vorgesehen sein, die auf jeden Fall fest mit der Basisplatte 40 und den Schwingelementen 42 bzw. 43 verbunden ist. Zusätzlich zu dieser Blattfeder 44a sind dann weitere, abnehmbare bzw. austauschbare Blattfedern 44b vorgesehen. Anstelle der Schrauben 50 sind Gewindebolzn 60 verwendet, an denen die festen, d.h. nicht austauschbaren Blattfedern 44a mit Hilfe von Konter-Muttern 61 festgelegt sind. Zum Festlegen der austauschbaren Blattfedern 44b dienen die Muttern 62.

Selbstverständlich kann eine ähnliche Ausbildung auch bei den Blattfedern 5 des Schwingsystems 2 verwendet sein.

Bei der vorstehenden Beschreibung wurde davon ausgegangen, daß jeweils ein Massenabgleich erfolgt, und zwar derart, daß Nutzmasse und Gegenmasse gleich oder in etwa gleich sind, wobei durch Austausch der Blattfedern zusätzlich auch die Federkonstanten für die Nutzmasse und Gegenmasse derart eingestellt werden, daß sich für die beiden Schwingelemente eine Eigenfrequenz ergibt, die möglichst gleich der Frequenz des Antriebs ist.

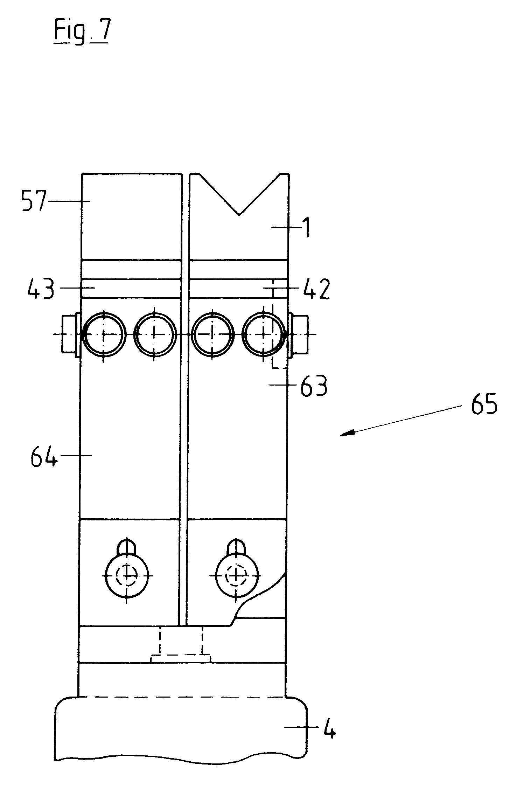

In der Fig. 7 ist ein Vibrationsförderer dargestellt, bei dem eine Kompensation des Schwingsystems bei Förderrinnen 1 mit unterschiedlicher Masse nicht durch entsprechende Änderung der Hilfsmasse 57 vorgenommen wird, sondern durch Änderung der Federkonstanten der dem Schwingelement 42 zugeordneten Blattfedern, und zwar in der Form, daß die Eigenfrequenz der das Schwingelement 42, die Förderrinne 1 usw. einschließenden Nutzmasse gleich der Eigenfrequenz der das Schwingelement 43, die Hilfsmasse 57 usw. einschließenden Gegenmasse ist. Um dies zu ermöglichen, sind anstelle der die Zungen 48 und 49 bildenden Blattfedern 44 bzw. 44a und 44b getrennte Blattfedern für die Schwingelemente 42 und 43 vorgesehen, d.h. die Blattfedern 63 für das Schwingelement 42 und die Blattfedern 64 für das Schwingelement 43.

Das in der Fig. 7 dargestellte Schwingsystem 65, bei dem die Blattfedern 63 und 64 wiederum mehrere Blattfederpakete bilden, ist insbesondere hinsichtlich der Anzahl der je Federpaket verwendeten Blattfedern 63 und 64, der Hilfsmasse 57 auch unter Berücksichtigung der Massen der Schwingelemente 42 und 43 sowie der Massen der an diesen Schwingelementen befestigten Teile des Antriebs (Magnetspule mit Eisenkern und Magnetanker) auf diejenige Förderrinne 1 auch in bezug auf die Frequenz des Antriebes optimal abgestimmt, die (Förderrinne) im Rahmen einer vorgegebenen Auswahl von verwendeten Förderrinnen 1 mit unterschiedlichen Massen die größte Masse aufweist.

Wird anstelle der Förderrinne 1 mit dieser größten Masse eine Förderrinne 1 mit kleinerer Masse verwendet, so erfolgt bei dem Schwingsystem 65 keine Änderung der Hilfsmasse 57, sondern eine Änderung der Federkonstanten der von den Blattfedern 63 gebildeten Blattfederpakete, d.h. es erfolgt eine Reduzierung der Anzahl der je Federpaket verwendeten Blattfedern 63 und/oder ein Austausch dieser Blattfedern 63 derart, daß die die Förderrinne 1 und das Schwingelement 42 aufweisende Nutzmasse wiederum die gleiche Eigenfrequenz aufweist wie die das Schwingelement 43 und die Hilfsmasse 57 aufweisende Gegenmasse.

Speziell für diesen Abgleich der Federkonstanten für die Nutzmasse ist es zweckmäßig, für die von den Blattfedern 63 gebildeten Blattfederanordnungen eine Ausführung ähnlich der Fig. 6 vorzusehen.

Bei den in den Figuren 1 bis 4 und 7 dargestellten Ausführungsformen ist es bei Verwendung der Förderrinne 1 oder eines ähnlichen, nur an einem der Schwingelemente 42, 43 befestigten Förderelementes auch möglich, dieses Förderelement nicht an dem Schwingelement 42, sondern an dem Schwingelement 43 und dementsprechend die evtl. vorhandene Hilfsmasse nicht an dem Schwingelement 43, sondern an dem Schwingelement 42 vorzusehen, d.h. die Schwingelemente in ihrer Funktion zu vertauschen, falls dies zweckmäßig erscheint. Grundsätzlich ist es auch denkbar, an beiden Schwingelementen 42 und 43 jeweils eine gesondere Förderrinne 1 oder ein ähnliches Förderelement zu verwenden.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Erfindungsgedanke verlassen wird.

### Aufstellung der verwendeten Bezugsziffern

- 1: Förderrinne
- 40: Basisplatte
- 40': Vorsprung
- 41: Schwingsystem
- 42, 43: Schwingelement
- 42', 43': Jochabschnitt
- 42'', 43'': Schenkel
- 44: Blattfeder
- 44': Abschnitt
- 45, 46: Blattfederpaket
- 47: Schlitz
- 48, 49: Zunge
- 50: Schraube
- 51: Unterlegblech
- 52: Magnetspule
- 53: Magnetanker
- 54: Befestigungswinkel
- 54', 54'': Schenkel
- 55: Schraube
- 56: Schlitz
- 57: Hilfsmasse
- 58: Bauelement
- 59: Förderrinne
- 59', 59'': Element
- 60: Gewindebolzen
- 61, 62: Mutter
- 63, 64: Blattfedern
- 65: Schwingsystem

## Patentansprüche

1. Vibrationsförderer, nämlich Vibrationslängsförderer für Bauelemente (58), mit einem eine Förderstrecke bildenden und sich in einer Förderrichtung (A) erstreckenden Förderelement (1), vorzugsweise in Form einer Förderrinne, sowie mit einem Schwingsystem (65), welches im wesentlichen aus einem ersten Schwingelement (42), das Teil einer Nutzmasse ist und an dem das Förderelement (1) befestigt ist, aus einem zweiten Schwingelement (43), welches Teil einer Gegenmasse ist, sowie aus Federelementen (63, 64), mit denen das erste Schwingelement (42) und das zweite Schwingelement (43) für eine gegenläufige Schwing- bzw. Vibrationsbewegung, die durch einen zwischen den beiden Schwingelementen (42, 43) wirkenden Antrieb parallel zu einer die Förderrichtung (A) einschließenden Mittelebene erfolgt und eine Bewegungskomponente in der Achse der Förderrichtung (A) aufweist, mit einem Basiselement verbunden ist, über welches das Schwingsystem (65) an einem Maschinengestell (4) befestigbar ist, wobei das Schwingsystem für Förderelemente (1) mit unterschiedlichen Massen verwendbar ist und zur Kompensation der Massenunterschiede die Federkonstante wenigstens eines Federelementes (63) des ersten und/oder zweiten Schwingelementes (42, 43) derart einstellbar ist, daß die Eigenfrequenz der Nutzmasse und der Gegenmasse sowie des Antriebs (52, 53) gleich oder in etwa gleich sind, **dadurch gekennzeichnet,** daß das erste Schwingelement (42) und das zweite Schwingelement (43) zusammen mit ihren Federn (48, 49) an jeweils einer Seite der Mittelebene und voneinander beabstandet vorgesehen sind.

2. Vibrationsförderer nach Anspruch 1, dadurch gekennzeichnet, daß auf einer Seite der Mittelebene das Förderelement (1) und auf der anderen Seite der Mittelebene die Hilfsmasse (57) vorgesehen sind.

3. Vibrationsförderer nach Anspruch 1, dadurch gekennzeichnet, daß ein in Förderrichtung (A) geteiltes Förderelement (59) verwendet ist, wobei ein Teil (59') dieses geteilten Förderelementes an dem ersten Schwingelement (42) und ein zweites Teil (59'') des Förderelementes (59) an dem zweiten Schwingelement (43) vorgesehen sind.

4. Vibrationsförderer nach einem der Ansprüche 1 - 3, dadurch gekennzeichnet, daß die Federkonstante der Nutzmasse durch Austausch und/oder Änderung der Anzahl der Blattfedern (63) erfolgt.

5. Vibrationsförderer nach einem der Ansprüche 1 - 4, dadurch gekennzeichnet, daß das zweite Schwingelement (43) an einem Teilbereich eine in ihrer Größe veränderbare Hilfsmasse (57) frei zugänglich aufweist.

6. Vibrationsförderer nach einem der Ansprüche 1 - 5, dadurch gekennzeichnet, daß die Gegenmasse so gewählt ist, daß sie gleich oder größer als die Nutzmasse ist, die bei Verwendung des Förderelementes (1) mit der größten Masse vorliegt.

7. Vibrationsförderer nach einem der Ansprüche 1 - 6, dadurch gekennzeichnet, daß die Federn jeweils Blattfedern oder jeweils Zungen (48, 49) von Federelementen (44, 44a, 44b) sind, die jeweils einen Schlitz (47) derart aufweisen, daß zwei Zungen (48, 49) gebildet sind, die durch den Schlitz (47) voneinander getrennt sind, und daß jedes Federelement (44, 44a, 44b) mit einem die Zungen (48, 49) verbindenden Abschnitt (44') am Basiselement (40) und mit dem freien Ende jeweils einer Zunge (48) mit dem ersten Schwingelement (42) und mit dem freien Ende der anderen Zunge (49) mit dem zweiten Schwingelement (43) verbunden ist.

8. Vibrationsförderer nach einem der Ansprüche 1 - 7, dadurch gekennzeichnet, daß wenigstens zwei Blattfedern oder zwei Federelemente (44, 44a, 44b, 63, 64) jeweils zu einem ein Federelement bildenden Blattfederpaket (45, 46) zusammengefaßt sind.

9. Vibrationsförderer nach einem der Ansprüche 1 - 8, gekennzeichnet durch einen Befestigungswinkel (54), der zum Befestigen des Förderelementes (1) mit einem Schenkel (54') an diesem Förderelement und mit einem anderen Schenkel (54'') an dem ersten Schwingelement (42) befestigbar ist, wobei bevorzugt der Befestigungswinkel (54) vorzugsweise unter Verwendung von seitlich offenen Schlitzen (56) abnehmbar am ersten Schwingelement (42) befestigbar ist.

10. Vibrationsförderer nach einem der Ansprüche 1 - 9, dadurch gekennzeichnet, daß die beiden Schwingelemente (42, 43) jeweils aus einem sich in Förderrichtung (A) erstreckenden Jochabschnitt (42', 43') sowie aus wenigstens einem sich hiervon nach unten erstreckenden Schenkel (42'', 43'') bestehen, und daß an den Schenkeln der zwischen den beiden Schwingelementen (42, 43) wirkende Antrieb (52, 53) befestigt ist.

11. Vibrationsförderer nach einem der Ansprüche 1 - 10, dadurch gekennzeichnet, daß die Federelemente teilweise feste, die Elemente des Schwingsystems relativ zueinander haltende Federelemente (44a) sowie teilweise entfernbare und/oder austauschbare Federelemente (44b) sind.

12. Vibrationsförderer nach einem der Ansprüche 1 - 11, dadurch gekennzeichnet, daß die beiden Schwingelemente (42, 43) in ihrer Funktion als erstes oder zweites Schwingelement vertauschbar sind.

13. Vibrationsförderer nach einem der Ansprüche 1 - 12, dadurch gekennzeichnet, daß bei von Blattfederpaketen gebildeten Federanordnungen die Blattfedern in jedem Blattfederpaket voneinander beabstandet sind.

## Claims

1. Vibratory conveyor, namely a vibratory lengthways conveyor, for component parts (58), with a conveyor element (1) forming a conveyor length and extending in a conveyor direction (A), preferably in the form of a conveyor channel, as well as with an oscillating system (65), essentially of a first oscillating element (42) which is part of a working mass and to which is fastened the conveyor element (1), of a second oscillating element (43) which is part of a counter mass, as well as of spring elements (63, 64), combining with the first oscillating element (42) and the second oscillating element (43) for a contra-operating oscillating or vibrating movement, which takes place by means of a drive operating between the two oscillating elements (42, 43) parallel to a central plane including the conveyor direction (A) and having a movement component in the axis of the conveyor direction (A), which is connected with a base element, over which the oscillating system (65) is fastenable to the machine frame (4) whereby the oscillating system for the conveyor element (1) is usable with differing masses and for the compensation of the mass differences, the spring constant of at least one spring element (63) of the first and/or second oscillating elements (42, 43) is adjustable in such a way that the resonant frequency of the working mass and the counter mass, as well as the drive (52, 53) are the same or approximately the same, characterised in that the first oscillating element (42) and the second oscillating element (43), together with their springs (48, 49), are provided each on one side of the middle plane spaced from one another.

2. Vibratory conveyor according to claim 1 characterised in that the conveyor element (1) is provided on one side of the middle plane and on the other side of the middle plane, the additional mass (57) is provided.

3. Vibratory conveyor according to claim 1 characterised in that a conveyor element (59) divided in the conveyor direction (A) is used, whereby one part (59') of this divided conveyor element is provided on the first oscillating element (42) and a second part (59') of the conveyor element (59) is provided on the second oscillating element (43).

4. Vibratory conveyor according to one of claims 1 to 3 characterised in that the spring constant of the working mass results from the replacement and/or alteration of the number of leaf springs (63).

5. Vibratory conveyor according to one of claims 1 to 4 characterised in that the second oscillating element (43) has on one partial area a freely accessible and changeable in its size additional mass (57).

6. Vibratory conveyor according to one of claims 1 to 5 characterised in that the counter mass is so chosen that it is the same or larger than the working mass which is available through the use of the conveyor element (1) with the largest mass.

7. Vibratory conveyor according to one of claims 1 to 6 characterised in that the springs are each leaf springs or each tongues (48, 49) of spring elements (44, 44a, 44b) which each have a slot (47) in such a way that two tongues (48, 49) are formed which are separated from one another by the slot (47) and that each spring element (44, 44a, 44b) is connected with a tongue (48, 49) connecting section (44') to the base element (40) and is connected with the free end of one tongue (48) with the first oscillating element (42) and is connected with the free end of the other tongue (49) with the second oscillating element (43).

8. Vibratory conveyor according to one of claims 1 to 7 characterised in that at least two leaf springs or two spring elements (44, 44a, 44b, 63, 64) are each combined into a leaf spring stack (45, 46) forming a spring element.

9. Vibratory conveyor according to one of claims 1 to 8 characterised by a fastening bracket (54) which is fastenable for the fastening of the conveyor element (1) with a leg (54') against this conveyor element and with another leg (54'') against the first oscillatory element (42) whereby preferably the fastening bracket (54), preferably through the use of lateral open slots (56), is removably fastenable to the first oscillating element (42).

10. Vibratory conveyor according to one of claims 1 to 9 characterised in that both oscillating elements (42, 43) each consist of a yoke section (42', 43') extending in the conveyor direction (A) as well as at least a leg (42'', 43'') extending downwardly from this and that the drive (52, 53) operating between both oscillating elements (42, 43) is fastened on the legs.

11. Vibratory conveyor according to one of claims 1 to 10 characterised in that the spring elements are partly fixed, the elements of the oscillating systems holding relative to one another spring element (44a) as well as partly removable and/or replaceable spring element (44b).

12. Vibratory conveyor according to one of claims 1 to 11 characterised in that both oscillating elements (42, 43) are interchangeable in their function as first or second oscillating element.

13. Vibratory conveyor according to one of claims 1 to 12 characterised in that for the spring arrangement formed from the leaf spring stack, the leaf springs in each leaf spring stack are spaced from one another.

## Revendications

1. Convoyeur à vibrations, c'est-à-dire convoyeur longitudinal à vibrations pour des éléments de construction (58), équipé d'un élément transporteur (1) formant une section de transport et s'étendant dans un sens de transport (A), de préférence sous la forme d'une gouttière de transport, et d'un système à oscillations (65) qui comprend pour l'essentiel un premier élément oscillant (42), qui fait partie d'une masse utile et sur lequel est fixé l'élément transporteur (1), un deuxième élément oscillant (43), qui fait partie d'une contre-masse, et des éléments élastiques (63, 64), avec lesquels le premier élément oscillant (42) et le deuxième élément oscillant (43) sont reliés à un élément de base pour un mouvement d'oscillation/vibration contraire qui s'effectue par un entraînement agissant entre les deux éléments oscillants (42, 43) parallèlement à un plan médian incluant le sens de transport (A) et présente une composante de mouvement dans l'axe du sens de transport (A), élément de base par lequel le système à oscillations (65) peut être fixé à un bâti de machine (4), moyennant quoi le système à vibration peut être utilisé pour des éléments transporteurs (1) avec des masses différentes et la constante de rappel d'au moins un élément élastique (63) du premier et/ou deuxième élément oscillant (42, 43) peut être réglé pour la compensation des différences de masses de telle façon que les fréquences de la masse utile et de la contre-masse ainsi que de l'entraînement (52, 53) soient égales ou à peu près égales, caractérisé en ce que le premier élément oscillant (42) et le deuxième élément oscillant (43) conjointement avec leurs ressorts (48, 49) sont prévus sur respectivement un côté du plan médian et sont espacés l'un de l'autre.

2. Convoyeur à vibrations selon la revendication 1, caractérisé en ce qu'on prévoit l'élément transporteur (1) sur un côté du plan médian et la masse auxiliaire (57) sur l'autre côté.

3. Convoyeur à vibrations selon la revendication 1, caractérisé en ce qu'on utilise un élément transporteur (59) divisé dans le sens de transport (A), une partie (59') de cet élément transporteur divisé étant prévue sur le premier élément oscillant (42) et une deuxième partie (59'') de l'élément transporteur (59) étant prévue sur le deuxième élément oscillant (43).

4. Convoyeur à vibrations selon l'une des revendications 1 à 3, caractérisé en ce que la constante de rappel de la masse utile s'effectue par le remplacement et/ou la modification du nombre des ressorts à lames (63).

5. Transporteur à vibrations selon l'une des revendications 1 à 4, caractérisé en ce que le deuxième élément oscillant (43) présente sur une zone partielle une masse auxiliaire (57) variable dans sa grandeur librement accessible.

6. Convoyeur à vibrations selon l'une des revendications 1 à 5, caractérisé en ce que la contre-masse est choisie de telle façon qu'elle soit égale ou supérieure à la masse utile que l'on a si l'on utilise l'élément transporteur (1) avec la masse maximale.

7. Convoyeur à vibrations selon l'une des revendications 1 à 6, caractérisé en ce que les ressorts sont respectivement des ressorts à lames ou respectivement des lames (48, 49) d'éléments élastiques (44, 44a, 44b) qui présentent chacun une fente (47) de telle façon que, deux lames (48, 49) sont constituées qui sont séparées l'une de l'autre par la fente (47), et en ce que chaque élément élastique (44, 44a, 44b) est relié à un tronçon (44') reliant les lames (48, 49) sur l'élément de base (40) et à l'extrémité libre d'une lame (48) avec le premier élément oscillant (42) et avec l'extrémité libre de l'autre lame (49) avec le deuxième élément oscillant (43).

8. Convoyeur à vibrations selon l'une des revendications 1 à 7, caractérisé en ce que au moins deux ressorts à lames ou deux éléments élastiques (44, 44a, 44b, 63, 64) sont regroupés respectivement en un groupe de ressorts à lames (45, 46) formant un élément élastique.

9. Convoyeur à vibrations selon l'une des revendications 1 à 8, caractérisé par une cornière de fixation (54), qui, pour la fixation de l'élément transporteur (1), peut être fixée avec une branche (54') sur cet élément transporteur et avec une autre branche (54'') sur le premier élément oscillant (42), moyennant quoi la cornière de fixation (54) peut être fixée de façon amovible sur le premier élément oscillant (42) de préférence en utilisant des fentes (56) ouvertes sur le côté.

10. Convoyeur à vibrations selon l'une des revendications 1 à 9, caractérisé en ce que les deux éléments oscillants (42, 43) comprennent chacun un tronçon d'armature (42', 43') s'étendant dans le sens de transport (A) et au moins une branche (42'', 43'') s'étendant à partir de là vers le bas), et en ce que l'entraînement (52, 53) agissant entre les deux éléments oscillants (42, 43) est fixé sur les branches.

11. Convoyeur à vibrations selon l'une des revendications 1 à 10, caractérisé en ce que les éléments élastiques sont en partie des éléments élastiques (44a) fixes et maintenant les éléments du système à oscillations les uns par rapport aux autres et en partie des éléments élastiques (44b) démontables et/ou interchangeables.

12. Convoyeur à vibrations selon l'une des revendications 1 à 11, caractérisé en ce que les deux éléments oscillants (42, 43) sont permutables dans leur fonction en tant que premier ou deuxième élément oscillant.

13. Convoyeur à vibrations selon l'une des revendications 1 à 12, caractérisé en ce que, sur les configurations formées de groupes de ressorts à lames, les ressorts à lames sont espacés les uns des autres sur chaque groupe de ressorts.
